# EUROPÄISCHE PATENTSCHRIFT

(11) **EP 3 808 686 B1**
(45) Veröffentlichungstag und Bekanntmachung des Hinweises auf die Patenterteilung: **20.03.2024**
(21) Anmeldenummer: 19203246.4
(22) Anmeldetag: 15.10.2019
(51) Int. Cl.: B65G 43/00, B65G 47/86

(54) **SMARTGRIPPER DATENÜBERTRAGUNGSEINHEIT**
SMART GRIPPER DATA TRANSMISSION UNIT
UNITÉ DE TRANSMISSION DE DONNÉES POUR PINCES INTELLIGENTES

(43) Veröffentlichungstag der Anmeldung: 21.04.2021
(73) Patentinhaber: Tyrolon-Schulnig GmbH, 6395 Hochfilzen (AT)
(72) Erfinder: Schulnig, Elmar, 6392 St. Jakob i.H. (AT)
(74) Vertreter: Meissner Bolte Partnerschaft mbB

(56) Entgegenhaltungen:
- DE-A1-102010 012 375
- US-A1- 2018 037 421

## Beschreibung

Die vorliegende Erfindung betrifft einen Greifarm für eine Vorrichtung zum Greifen, Halten und Führen von insbesondere flaschenartigen Behältern und eine Transportvorrichtung mit derartigen Greifarmen.

Dabei betrifft die Erfindung das Thema "Internet of Things" (IoT), weshalb der erfindungsgemäße Greifarm auch als "Smartgripper" und die erfindungsgemäße Greifvorrichtung bzw. System als "Smartgripper Unit" bezeichnet werden. IoT beschreibt die Vernetzung von Gegenständen mit Netzwerken wie z.B. das Internet, damit diese Gegenstände selbstständig über diese Netzwerke kommunizieren und so verschiedene Aufgaben für den Besitzer erledigen können. Im deutschsprachigen Raum wird IoT auch als "Industrie 4.0" bezeichnet. Der Anwendungsbereich erstreckt sich dabei von einer allg. Informationsversorgung, über automatische Bestellungen bis hin zu Warn- und Notfallfunktionen. Dies ist insbesondere durch die steigende Datenvernetzung von Geräten, die Abrufbarkeit von Informationen, z.B. durch Mobiltelefone, sowie der verbesserten Miniaturisierung von elektronischen Komponenten möglich. Auch besteht ein Hauptaspekt des IoT darin, dass Gegenstände hierarchieunabhängig miteinander kommunizieren können.

Ein Greifarm, wie z.B. in der DE29713510 und WO2006/089610 bekannt ist, bildet einen Teil einer Vorrichtung, insbesondere einer Greifvorrichtung (auch "Klammergreifer" genannt), welche zum Bewegen eines Greifabschnitts des Greifarms von einer Öffnungsstellung in eine Greifstellung oder umgekehrt ausgebildet ist. Diese Bewegung wird insbesondere durch ein Steuermittel kontrolliert. Der Greifarm selbst weist eine Bohrung zur Lagerung eines Lagerbolzens zum schwenkbaren Befestigen des Greifarms in der Vorrichtung, und einen Kraftspeicher zum Bewegen des Greifabschnitts des Greifarms von der Greifstellung in die Öffnungsstellung oder umgekehrt auf. Die DE29713510 und die WO2006/089610 offenbaren einen Greifarm gemäß dem Oberbegriff des Anspruchs 1.

Unter dem Begriff "Behälter" sind nachstehend insbesondere, aber nicht ausschließlich flaschenartige Behälter zu verstehen, also zum Beispiel Getränkeflaschen aus Glas oder Kunststoff, aber auch Fläschchen für Arzneimittel oder Parfüm. Unter den Begriff fallen ebenfalls andere Glas- oder Kunststoffbehälter, die ähnlich zu einer Flasche insbesondere einen Hals oder eine zur Öffnung verjüngende Struktur aufweisen.

Ein solcher Greifarm ist dem Grunde nach aus dem Stand der Technik bekannt und wird bei der fließbandtechnischen Bearbeitung von Behältern verwendet. Insbesondere beim oder zum Reinigen, Befüllen oder Verschließen werden die Behälter bei einer Station mittels eines rotierenden Transport- bzw. Klammersterns, der eine Vielzahl von koaxial angeordneten Greifvorrichtungen mit mindestens einem Greifarmpaar aufweist, ergriffen und zur nächsten Station im Prozess transportiert.

Beim Greifen und Transportieren von Behältern wird ein Greifarm verschiedenen Druck-, Zug- und/oder Scherkräften ausgesetzt. Diese Kräfte können zu einer Verbiegung oder gar einem Bruch des Greifarms führen und begrenzen dadurch unter anderem die Betriebslaufzeit bzw. Lebensdauer eines Greifarms.

Ebenso kommt ein Greifarm während seiner Betriebslaufzeit mit mehreren hunderttausenden Behältern in Kontakt und führt genauso oft eine Greif- oder Öffnungsbewegung aus. Dadurch werden verschiedene mechanische Komponenten des Greifarms, wie z.B. des Greifabschnitts (für den Behälter), der Bohrung (für den Lagerbolzen) und des Betätigungsabschnitts (für das Steuermittel), abgenutzt, was wiederum zu einer Fehlfunktion führen kann.

Aus dem Stand der Technik ergibt sich somit die Notwendigkeit, den Greifarm identifizieren, den Zustand des Greifarms, insbesondere während des Betriebs, ermitteln und/oder Vorhersagen über die zukünftige Betriebstauglichkeit oder die zu erwartende Lebensdauer treffen zu können. Dadurch sollen z.B. Reinigungs- und Abfüllanlagen für Flaschen besser überwacht und schneller gewartet werden, um Wartungsarbeiten frühzeitig zu erkennen und kurz zu halten. Auch hat der Benutzer ein berechtigtes Interesse daran, den aktuellen Zustand seiner Greifarme jederzeit und gegebenenfalls auch aus der Ferne kontrollieren zu können.

Der Erfindung liegt angesichts der zuvor genannten Nachteile und Probleme die Aufgabe zugrunde, die Eigenschaften und Daten des Greifarms elektronisch zu sammeln und zu verteilen. Insbesondere sollen diese Daten entsprechenden Rechnersystemen bereitgestellt werden, um diese für Zustandsberechnungen und Vorhersagen zur Betriebsfähigkeit und Lebensdauer der Greifarme und/oder Greifvorrichtungen analysieren zu lassen.

Zur Lösung dieser Aufgabe wird ein Greifarm mit einer Datenübertragungseinheit nach Anspruch 1 bereitgestellt. Im Detail ist eine Datenübertragungseinheit für einen Greifarm einer Greifvorrichtung zum Greifen, Halten und Führen von insbesondere flaschenartigen Behältern oder für die Greifvorrichtung vorgesehen. Dabei ist die Datenübertragungseinheit ausgelegt ist, Daten von einer Datenerzeugungseinheit und/oder einem Datenspeicher des Greifarms und/oder der Greifvorrichtung zu empfangen, Daten basierend auf den empfangenen Daten an eine Datenempfängereinheit zu senden, und insbesondere Daten von der Datenempfängereinheit zu empfangen. Zusätzlich ist die Datenübertragungseinheit ausgebildet, in, an, auf und/oder neben dem Greifarm und/oder der Greifvorrichtung angeordnet, eingesetzt und/oder integriert zu werden/sein.

Die Datenübertragungseinheit ermöglicht die Bereitstellung von elektronischen Daten, insbesondere unmittelbar von einem Greifarm oder einer Greifvorrichtung aus. Dadurch verkürzt sich eine Kommunikationsverbindung zwischen einer Datenerzeugungseinheit und/oder einem Datenspeicher des Greifarms und/oder der Greifvorrichtung, wodurch Material und somit Kosten gespart werden.

Des Weiteren hat die Datenübertragungseinheit den Vorteil, den eigentlichen Betrieb eines Greifarms, wie z.B. das Greifen, Schwenken und Halten, nicht zu behindern. Je nach Position und/oder Anordnung am Greifarm kann die Datenübertragungseinheit derart dimensioniert sein, dass sie keinen Fortsatz oder Erhebung am Greifarm bildet, die insbesondere den Betrieb des Greifarms behindert. Alternativ oder zusätzlich kann die Datenübertragungseinheit in ihrer Form der Form des Greifarms angepasst sein, d.h. fluchtend und/oder stetig (ohne Sprünge oder Stufen) zur Fläche des Greifarms ausgebildet und/oder angeordnet sein.

Ein weiterer Vorteil der Datenübertragungseinheit ist ihre Struktur- und/oder Materialbeschaffenheit, die es ihr erlaubt, vor, während und/oder nach dem Herstellungsprozess des Greifarms angeordnet bzw. eingesetzt zu werden. Hierzu kann die Datenübertragungseinheit gegen hohe Temperaturen und/oder Drücke, z.B. durch eine Oberflächenisolationsschicht und/oder eine konstant bzw. gleichmäßig geformte Leitungsschichtstruktur, geschützt sein, wenn die Datenübertragungseinheit beim Kunststoffspritzgussverfahren des Greifarms vom Kunststoff umschlossen wird. Sollte der Greifarm aus zumindest teilweise elektrisch leitfähigem Material bestehen, ist die Datenübertragungseinheit gegenüber diesem Material vorzugsweise elektrisch isoliert.

Unter einer angeordneten Datenübertragungseinheit ist vorzugsweise die Verwendung eines Form- oder Stoffschlusses wie beispielsweise Kleber, unter einer eingesetzten Datenübertragungseinheit vorzugsweise eine Einsetzung in eine Aufnahme eines gefertigten Greifarms beispielsweise mittels Form- und/oder Kraftschluss und unter einer integrierten Datenübertragungseinheit vorzugsweise eine Ausbildung der Einheit während bzw. mit der Herstellung eines Greifarms und/oder Anordnung der Einheit innerhalb eines Greifarms zu verstehen.

Die Datenübertragungseinheit kann zur kabelgebundenen und/oder zur kabellosen Datenübertragung ausgelegt sein.

Als bevorzugte Ausführungsformen haben sich Datenübertragungseinheiten als besonders vorteilhaft herausgestellt, die für eine kabellose Datenübertragung konfiguriert sind. Diese Einheiten können insbesondere mit einem passiven oder aktiven RFID-Chip oder -System ausgestattet sein. Bei der kabellosen Datenübertragung können auch bekannte Datenübertragungsstandards wie z.B. Bluetooth oder WLAN verwendet werden.

Dieser Greifarm hat den Vorteil, ein eigenständiges Element eines Kommunikationsnetzwerks zu sein bzw. zu werden, das Informationen elektronisch bereitstellt und sich mit einem oder mehreren Netzwerken durch entsprechende Netzwerkprotokolle bzw. -verfahren automatisch verbinden kann. Vorzugsweise ist die Datenübertragungseinheit ausgelegt, die Daten kabel- und/oder kontaktgebunden, insbesondere mittels elektrischen und/oder optischen Signalen, zu senden und/oder zu empfangen. Diese vorteilhafte Ausführungsform bildet die höchste Datensicherheit bei der Datenübertragung und kann nur schwer elektronisch gestört, unterbrochen und/oder abgefangen werden. Die Verwendung von Glasfaserkabeln bei optischen Signalen, anstelle von kupfergebundenen bzw. elektrischen Leitungen, verringert das Gewicht der Vernetzung.

In einer weiteren vorteilhaften Ausführungsform ist die Datenübertragungseinheit als eine Lagerbuchse ausgebildet, in der Bohrung auf, die in eine Bohrung des Greifarms einsetzbar ist und ausgelegt ist, als Lagerung für einen Lagerbolzen zu fungieren und die Daten über Kontakte, insbesondere Schleifkontakte, an den bzw. von dem Lagerbolzen zu senden und/oder zu empfangen. Der Lagerbolzen der Greifvorrichtung ist entsprechend ausgebildet und weist elektrische Kontakte sowie eine Datenübertragungsleitung zu einer Rechnereinheit zum Verarbeiten der Daten auf.

Die Datenübertragungseinheit ist ausgelegt, die Daten kabellos, insbesondere mittels elektromagnetischen und/oder optischen Signalen, zu senden. Zusätzlich kann die Datenübertragungseinheit ausgelegt sein, die Daten kabellos, insbesondere mittels elektromagnetischen und/oder optischen Signalen zu empfangen. Diese vorteilhafte Ausgestaltung erlaubt einen schnellen Aufbau der Greifvorrichtungen und eine einfachere Vernetzung der Datenübertragungseinheit mit einem Empfänger. Dabei sind keine Kabel mehr notwendig, wodurch eine übersichtlichere Transportvorrichtung mit Greifvorrichtungen bereitgestellt wird. Akustische Signale als Datenübertragung sind auch möglich, aber aufgrund der Greifgeräusche beim Greifen der Behälter nur bedingt verwendbar.

Des Weiteren kann die Datenübertragungseinheit mindestens einen Transponder (eine Kombination aus Transmitter und Responder) und/oder Transceiver (eine Kombination aus Transmitter und Receiver), insbesondere in Form eines RFID-Systems, aufweisen, der/die in dem Greifarm integriert, eingesetzt und/oder auf dem Greifarm angeordnet ist/sind. Ein Transponder ist ein Funk-Kommunikationsgerät, das eingehende Signale aufnimmt und automatisch beantwortet bzw. weiterleitet. Ein Transponder sendet erst oder nur dann ein Signal aus, nachdem es ein Signal empfangen hat. Dies reduziert den benötigten Energieverbrauch der Datenübertragungseinheit.

Um zusätzlich Energie zu sparen, weist die Datenübertragungseinheit vorzugsweise mindestens eine Richtantenne, insbesondere eine Spule und/oder eine Phased-Array-Antenne, auf, die in dem Greifarm integriert, eingesetzt und/oder auf dem Greifarm angeordnet ist/sind. Die Richtantenne ermöglicht es, in eine vorbestimmte Richtung ein elektromagnetisches Signal zu senden, wobei dessen benötigter Energieverbrauch im Vergleich zu dem einer omnidirektionalen Antenne für ein Signal gleicher Stärke geringer ist. Des Weiteren ist die Datenübertragungseinheit, insbesondere ihre Antenne, derart ausgelegt, Signale für eine bestimmte Reichweite und/oder in eine bestimmte Richtung, insbesondere zu einer oder mehreren Datenempfangseinheiten, zu senden.

Vorzugsweise weist die Datenübertragungseinheit eine Energiequelle auf, insbesondere in Form einer Batterie, Kapazität und/oder eine Induktionsspule. Die Induktionsspule kann von einem magnetischen Wechselfeld den Versorgungsstrom für die Datenübertragungseinheit erzeugen und gleichzeitig als Sender- und/oder Empfängerantenne für elektromagnetische Signale agieren. Das magnetische Wechselfeld kann von einer Datenempfangseinheit stammen, die dazu ausgelegt ist, die Daten der Datenübertragungseinheit als elektromagnetische Signale zu empfangen. Alternativ oder zusätzlich kann der Greifarm und/oder die Greifvorrichtung einen Stromanschluss für die Datenübertragungseinheit aufweisen.

Erfindungsgemäß ist der Greifarm für eine Vorrichtung zum Greifen, Halten und Führen von insbesondere flaschenartigen Behältern, welche zum Bewegen eines Greifabschnitts des Greifarms von einer Öffnungsstellung in eine Greifstellung oder umgekehrt ausgelegt ist, vorgesehen. Der Greifarm weist eine Bohrung zur Lagerung eines Lagerbolzens zum schwenkbaren Befestigen des Greifarms in der Vorrichtung, und einen Kraftspeicher zum Bewegen des Greifabschnitts des Greifarms von der Greifstellung in die Öffnungsstellung oder umgekehrt auf. Zusätzlich weist der Greifarm eine Datenübertragungseinheit auf, die ausgelegt ist, Daten zu senden und/oder zu empfangen, wobei die empfangenen Daten von einer Datenerzeugungseinheit stammen.

Die vorliegende Erfindung betrifft ebenfalls eine Transportvorrichtung mit einer Vielzahl von Greifvorrichtungen mit mindestens einem Paar aus einem erfindungsgemäßen Greifarm und einem gegengleich ausgebildeten Greifarm. Die Transportvorrichtung weist eine Datenempfangseinheit zum Empfangen der Daten von der einen oder mehreren Datenübertragungseinheiten und zum Weiterleiten der Daten an eine Rechnereinheit auf.

Die erfindungsgemäße Transportvorrichtung, auch Klammerstern genannt, bildet ein System mit einer Vielzahl von Datenübertragungseinheiten, wobei vorzugsweise eine Einheit an jeweils einem Greifarm oder einer Greifvorrichtung angeordnet ist, und einem oder mehreren Datenempfangseinheiten, die die Signale der Datenübertragungseinheiten kabelgebunden und/oder kabellos empfangen. Die Transportvorrichtung ist mit einer kreisrunden Trägerplatte bzw. -einrichtung ausgestattet, auf der die Greifvorrichtung konzentrisch um eine Rotationsachse befestigt sind.

Es hat sich als vorteilhaft erwiesen, wenn die Datenempfangseinheit an der Rotationsachse der Transportvorrichtung angeordnet ist und somit eine zentrale und für die Datenübertragungseinheiten gleichmäßig weitentfernte Position einnimmt. Dadurch ist die Datenübertragung zum Empfänger unabhängig von der Position der Datenübertragungseinheit stets gleich gut.

Es wird darauf hingewiesen, dass die vorliegende Erfindung ein Datenübertragungssystem bereitstellt, wie es in der Transportvorrichtung exemplarisch beschrieben wird. Das Datenübertragungssystem wird durch mindestens einen erfindungsgemäßen Greifarm, eine Datenübertragungseinheit und mindestens eine hierin beschriebene Datenempfangseinheit gebildet, die die Daten der Datenübertragungseinheit empfangen kann.

Des Weiteren gibt die vorliegende Erfindung ein erfindungsgemäßes System an, das einen erfindungsgemäßen Greifarm, eine Datenerzeugungseinheit, eine Datenübertragungseinheit und eine Datenverarbeitungseinheit aufweist. Die Datenerzeugungseinheit und/oder die Datenübertragungseinheit sind vorzugsweise Teil eines Greifarms für eine Greifvorrichtung zum Greifen, Halten und Führen von insbesondere flaschenartigen Behältern, welche zum schwenkbaren Bewegen eines Greifabschnitts des Greifarms von einer Öffnungsstellung in eine Greifstellung oder umgekehrt ausgelegt ist. Hierbei überträgt die Datenübertragungseinheit die von der Datenerzeugungseinheit erzeugten Daten des Greifarms an die Datenverarbeitungseinheit. Das System weist zusätzlich das zuvor beschriebene Datenübertragungssystem vorzugsweise auf.

Vorzugsweise sind die Datenerzeugungseinheit, die Datenübertragungseinheit und/oder die Datenverarbeitungseinheit plug-and-play fähig. Das bedeutet, dass sich für einen Datenaustausch die genannten Einheiten miteinander und/oder mit anderen elektronischen Geräten und/oder Netzwerken verbinden bzw. vernetzen können, ohne das Gerätetreiber installiert oder Einstellungen vorgenommen werden müssen.

Die Datenerzeugungseinheit ist erfindungsgemäß zur Erzeugung von Zustandsdaten ausgebildet. Die Zustandsdaten enthalten hierbei eine Information über eine Zustandsgröße einer Greifvorrichtung zum Greifen, Halten und Führen von insbesondere flaschenartigen Behältern. Die Datenerzeugungseinheit weist eine Erfassungseinheit auf, die zur Erfassung der zumindest einen Zustandsgröße der Greifvorrichtung dient. Weiterhin weist die Datenerzeugungseinheit eine Dateneinheit zur Erzeugung der Zustandsdaten auf.

Mit dem Begriff "Zustandsdaten" werden insbesondere, aber nicht ausschließlich, Information über eine Zustandsgröße, beispielsweise Abnutzung, maximale Belastung, und dergleichen, einer Greifvorrichtung zum Greifen, Halten und Führen von insbesondere flaschenartigen Behältern bezeichnet. Unter der Erzeugung der Zustandsdaten kann hierbei ein Zusammenfügen der erfassten Zustandsgrößen zu einem Datenpaket und/oder eine Erzeugung und/oder Konvertierung eines Datentyps des Datenpakets verstanden werden.

Die Datenverarbeitungseinheit ist vorzugsweise zur Verarbeitung von Daten, insbesondere von Zustandsdaten einer Greifvorrichtung zum Greifen, Halten und Führen von insbesondere flaschenartigen Behältern, ausgebildet, wobei die Datenverarbeitungseinheit eine Datenaufbereitungseinheit zum Aufbereiten der Daten der Greifvorrichtung, wobei durch das Aufbereiten ein Zustand der Greifvorrichtung berechnet wird und/oder eine Vorhersage zur Betriebsfähigkeit und/oder Lebensdauer ermöglicht wird; und eine Datendarstellvorrichtung zur Darstellung der aufbereiteten Daten der Greifvorrichtung, insbesondere einen Bildschirm und/oder ein Web-Interface, aufweist.

Unter dem Begriff "aufbereiten" oder "verarbeiten" sind in diesem Zusammenhang insbesondere die bekannten mathematischen Operationen zusammengefasst, wie beispielsweise Vergleich, UND, ODER, XOR, XNOR, Multiplikation, Division, Addition, Subtraktion, und dergleichen.

Die vorliegende beschriebene Datenübertragungseinheit wird bei einer Greifvorrichtung zum Greifen, Halten und Führen von insbesondere flaschenartigen Behältern verwendet, um elektronische Daten von dem Greifarm und/oder der Greifvorrichtung zu verschicken.

Beispielsweise kann ein Datenübertragungsverfahren für eine mindestens eine Datenübertragungseinheit aufweisende Greifvorrichtung zum Greifen, Halten und Führen von insbesondere flaschenartigen Behältern, mit folgenden Schritten durchgeführt werden:
Erfassen von Daten, die von einer oder mehreren Datenerzeugungseinheiten und/oder Datenspeichern der Greifvorrichtung bereitgestellt werden;
Senden von Daten, die auf den erfassten Daten basieren, von der mindestens einen Datenübertragungseinheit;
Empfangen der gesendeten Daten von mindestens einer Datenempfangseinheit; und
Verarbeiten der empfangenen Daten von einer Datenverarbeitungseinheit. Dieses Verfahren hat den Vorteil, gleichzeitig zum eigentlichen Betrieb der Greifvorrichtung, z.B. dem Greifen der Behälter, ausgeführt werden zu können, ohne diesen einzuschränken. Zusätzlich können die entsprechenden Greifarme und/oder Greifvorrichtungen durch die Übertragung der Daten aus dem Datenspeicher identifiziert werden.

Das Senden der Daten erfolgt kabellos und das Empfangen der Daten kann vorzugsweise kabelgebunden und/oder kabellos erfolgen.

Gemäß einer weiteren vorteilhaften Ausführungsform erfolgt das Senden der Daten von mehreren Datenübertragungseinheiten gleichzeitig oder zueinander zeitlich versetzt. Sollte die Datenübertragung gleichzeitig erfolgen, können zusätzlich Multiplexverfahren, wie z.B. Raummultiplexverfahren, Frequenz- bzw. Wellenlängenmultiplexverfahren oder Codemultiplexverfahren, verwendet. Bei Zeitmultiplexverfahren, wie z.B. Bluetooth, in denen die Signale zeitversetzt übertragen werden, steht jeder Datenübertragungseinheit ein oder mehrere eigene Zeitfenster zur Verfügung.

Des Weiteren können vor dem Senden der Daten die folgenden Schritte ausgeführt werden:
Sammeln der erfassten Daten;
Filtern der gesammelten Daten; und
Erzeugen eines zusendenden Datenpakets der gefilterten Daten.

Die von einer Datenübertragungseinheit bereitgestellten Daten können von einem Speicher stammen und die Seriennummer und/oder den Herstellungstag des Greifarms beinhalten. Aufgrund dieser Daten kann eine Prognose über die Lebensdauer des Greifarms erstellt und z.B. Ersatzteile rechtzeitig, vor einem Defekt des Greifarms, bestellt werden.

Die bereitgestellten Daten können auch von einer Datenerzeugungseinheit stammen. Hierbei kann es sich um elektronische Bauteile zur Messung von Merkmalen und Eigenschaften des Greifarms handeln, die Messdaten automatisch oder durch ein Steuersignal erzeugen und der Datenübertragungseinheit zur Verfügung stellen.

Sowohl der Speicher und/oder die Datenerzeugungseinheit können Teil der Datenübertragungseinheit und/oder mit dieser elektrisch verbunden sein.

Das Verfahren bzw. das Datenübertragungssystem kann bekannte Kommunikationsverfahren verwenden, wie beispielsweise SISO, SIMO (für Single Input Multiple Output), MISO oder MIMO, und mit den Datenübertragungseinheiten und Datenempfangseinheiten entsprechend aufgebaut und konfiguriert sein.

Die vorliegende Patentanmeldung nimmt explizit Bezug auf die am gleichen Tag und vom gleichen Anmelder eingereichten Patentanmeldungen mit dem Titel "Smartgripper Datenerzeugungseinheit" sowie "Smartgripper Datenverarbeitungseinheit". Die darin beschriebene Datenerzeugungseinheit, Datenübertragungseinheit und Datenverarbeitungseinheit und ihre Merkmale sowie die Kombination dieser Einheit/en bzw. Merkmale mit den hierbeschriebenen Merkmalen gelten als zusätzlicher Offenbarungsgehalt der Patentanmeldung.

Die nachfolgend beschriebenen Figuren beziehen sich auf bevorzugte Ausführungsbeispiele des erfindungsgemäßen Kombikabels als auch der erfindungsgemäßen Achsantriebseinheit, wobei diese Figuren nicht als Einschränkung, sondern im Wesentlichen der Veranschaulichung der Erfindung dienen. Elemente aus unterschiedlichen Figuren, aber mit denselben Bezugszeichen sind identisch; daher ist die Beschreibung eines Elements aus einer Figur für gleichbezeichnete bzw. gleichnummerierte Elemente aus anderen Figuren auch gültig.

Es zeigen
- Fig. 1: eine schematische Datenübertragung zwischen einer Datenübertragungseinheit gemäß einem bevorzugten Ausführungsbeispiel sowie einer Datenempfangseinheit;
- Fig. 2: eine schematische Datenübertragung zwischen einer Vielzahl von Datenübertragungseinheiten gemäß einem weiteren bevorzugten Ausführungsbeispiel und einer Vielzahl von Datenübertragungseinheiten; und
- Fig. 3: eine Transportvorrichtung gemäß einem bevorzugten Ausführungsbeispiel mit einem Datenübertragungssystem.

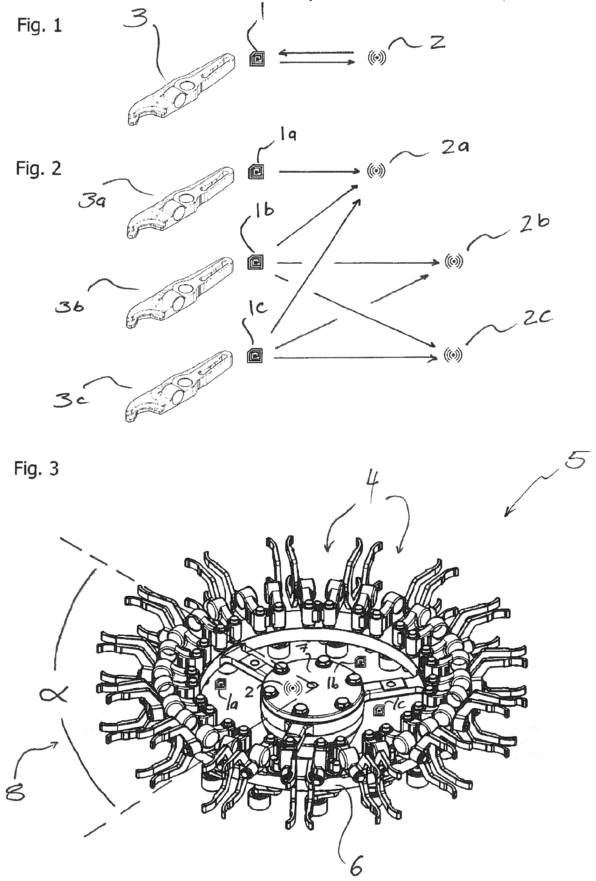

Fig. 1 zeigt eine schematische Datenübertragung zwischen einer Datenübertragungseinheit 1 gemäß einem bevorzugten Ausführungsbeispiel sowie einer Datenempfangseinheit 2. Die Datenübertragungseinheit 1 ist ausgebildet, Signal zu empfangen als auch zu senden. In diesem Ausführungsbeispiel ist sie ein RFID Chip, der an einem Greifarm 3 angeordnet, insbesondere aufgeklebt ist. Ein bevorzugter Ort für die Datenübertragungseinheit 1 ist die Rückseite des Greifarms 3, das einem Greifabschnitt gegenüberliegende Ende. Die Datenempfangseinheit 2 ist ausgebildet, Daten zu empfangen, vorzugsweise von der Datenübertragungseinheit 1. Zusätzlich kann sie konfiguriert sein, mittels eines elektromagnetischen Signals Daten an die Datenübertragungseinheit 1 zu senden und vorzugsweise den RFID Chip 1 mit Energie zu versorgen.

Fig. 2 zeigt eine schematische Datenübertragung zwischen einer Vielzahl von Datenübertragungseinheiten 1a, 1b, 1c gemäß einem weiteren bevorzugten Ausführungsbeispiel und einer Vielzahl von Datenempfangseinheiten 2a, 2b, 2c, wobei die genannten Einheiten denen aus Fig. 1 entsprechen und somit die gleichen Eigenschaften und Merkmale aufweisen. Die Datenübertragungseinheiten 1a, 1b, 1c der drei Greifarme 3a, 3b, 3c sind ausgelegt, die Daten an die Datenempfangseinheiten 2a, 2b, 2c zu senden, insbesondere gleichzeitig. Alternativ oder zusätzlich können die gesendeten Daten von den Datenübertragungseinheiten, in diesem Fall von 1b und 1c, von mehreren Datenempfangseinheiten, in diesem Fall von 2b und 2c, empfangen werden, insbesondere gleichzeitig. Die von den Datenempfangseinheiten 2a, 2b, 2c empfangenen Daten werden an eine Rechnereinheit oder eine Datenverarbeitungseinheit (nicht dargestellt) geschickt, in der die Daten dekodiert, auf Richtigkeit überprüft und/oder anschließend analysiert werden.

Fig. 3 zeigt eine Transportvorrichtung 5 gemäß einem bevorzugten Ausführungsbeispiel mit einem Datenübertragungssystem, das durch eine Datenempfangseinheit 2 und eine Vielzahl von Datenübertragungseinheiten 1a, 1b und 1c gebildet wird. Die Transportvorrichtung 5 weist eine Rotationsachse bzw. -welle 7 auf, die mit einem Trägerring 6 fest verbunden ist und diesen in Rotation versetzen kann. Auf dem kreisförmigen Trägerring 6 ist eine Vielzahl von Greifvorrichtung 4 konzentrisch um den Achse 7 befestigt. In der Mitte der Transportvorrichtung 5, insbesondere auf der Rotationsachse 7, ist eine Datenempfängereinheit 2 angeordnet, die nicht mit der Achse 7 bzw. dem Trägerring 6 mitrotiert bzw. mitrotieren kann. Dadurch ist ein Übertragungsbereich/-winkel 8 der Datenempfängereinheit 2 nicht verschwenkbar und stets in die gleiche Richtung ausgerichtet. Die Greifarme der Greifvorrichtungen 4 sind jeweils mit einer Datenübertragungseinheit 1a, 1b, 1c versehen und rotieren durch den Übertragungsbereich 8 durch. Sobald die Greifarme beim Rotieren in diesen Bereich 8 gelangen, werden die Datenübertragungseinheiten, in diesem Fall 1a, durch die Datenempfangseinheit 2 aktiviert und können die Daten an die Empfangseinheit 2 übertragen. Die übrigen Datenübertragungseinheiten, in diesem Fall 1b und 1c, befinden sich in diesem Moment nicht im Übertragungsbereich 8 und sind daher nicht aktiviert und senden keine Daten. Die Verwendung einer derartigen Datenempfangseinheit 2 bzw. eines Übertragungsbereichs/-winkels 8 hat den Vorteil, dass eine räumliche Trennung zu anderen Transportvorrichtungen oder anderen elektromagnetischen Datensignalen erreicht wird. Dadurch wird insbesondere ein Elektrosmog von Signalen reduziert.

Sowie die Fig. 3 eine Datenempfangseinheit mit einer gerichteten Antennencharakteristik gezeigt hat, existieren weiteren Ausführungsformen, in denen die Empfangseinheit mit einer anderen, z.B. einer omnidirektionalen Antennenrichtcharakteristik ausgebildet ist. Diese hat den Vorteil, die Daten aller Datenübertragungseinheiten einer Transportvorrichtung zu jeder Zeit und gleichzeitig zu empfangen.

### Bezugszeichenliste

- 1: Datenübertragungseinheit
- 1a: erste Datenübertragungseinheit
- 1b: zweite Datenübertragungseinheit
- 1c: dritte Datenübertragungseinheit
- 2: Datenempfangseinheit
- 2a: erste Datenempfangseinheit
- 2b: zweite Datenempfangseinheit
- 2c: dritte Datenempfangseinheit
- 3: Greifarm
- 3a: erster Greifarm
- 3b: zweiter Greifarm
- 3c: dritter Greifarm
- 4: Greifvorrichtung
- 5: Transportvorrichtung
- 6: Trägerplatte/-ring
- 7: Rotationsachse
- 8: Übertragungsbereich/-winkel

## Patentansprüche

1. Greifarm für eine Greifvorrichtung zum Greifen, Halten und Führen von insbesondere flaschenartigen Behältern, welche zum Bewegen eines Greifabschnitts des Greifarms durch Schwenken des Greifarms von einer Öffnungsstellung in eine Greifstellung oder umgekehrt ausgelegt ist, mit einer Bohrung zur Lagerung eines Lagerbolzens zum schwenkbaren Befestigen des Greifarms in der Vorrichtung, und
mit einem Kraftspeicher zum Bewegen des Greifabschnitts des Greifarms von der Greifstellung in die Öffnungsstellung oder umgekehrt, **dadurch gekennzeichnet, dass**
der Greifarm eine Datenübertragungseinheit (1) mit einer Datenerzeugungseinheit aufweist,
wobei die Datenübertragungseinheit (1) in, an oder auf dem Greifarm angeordnet und ausgelegt ist,
- Daten von der Datenerzeugungseinheit zu empfangen, und
- Daten basierend auf den empfangenen Daten an eine Datenempfängereinheit zu senden,
wobei die Datenübertragungseinheit (1) dazu ausgelegt ist, die Daten kabellos zu senden, und
die Datenerzeugungseinheit
(i) zur Erzeugung von Zustandsdaten ausgebildet ist, die eine Information über eine Zustandsgröße einer Greifvorrichtung enthalten, und eine Erfassungseinheit zur Erfassung der zumindest einen Zustandsgröße der Greifvorrichtung und eine Dateneinheit zur Erzeugung der Zustandsdaten aufweist, und/oder
(ii) elektronische Bauteile zur Messung von Merkmalen und Eigenschaften des Greifarms umfasst, die Messdaten automatisch oder durch ein Steuersignal erzeugen und der Datenübertragungseinheit (1) zur Verfügung stellen.

2. Greifarm nach Anspruch 1,
**dadurch gekennzeichnet, dass**
die Datenübertragungseinheit ausgelegt ist, die Daten kabel- und/oder kontaktgebunden, insbesondere mittels elektrischen und/oder optischen Signalen zu senden und/oder zu empfangen.

3. Greifarm nach Anspruch 1 oder 2,
**dadurch gekennzeichnet, dass**
die Datenübertragungseinheit als eine Lagerbuchse ausgebildet ist, die in eine Bohrung des Greifarms eingesetzt ist und ausgelegt ist, als Lagerung für einen Lagerbolzen zu fungieren und die Daten über Kontakte, insbesondere Schleifkontakte, an den bzw. von dem Lagerbolzen zu senden und/oder zu empfangen.

4. Greifarm nach einem der Ansprüche 1 bis 3,
**dadurch gekennzeichnet, dass**
die Datenübertragungseinheit ausgelegt ist, die Daten kabellos mittels elektromagnetischen und/oder optischen Signalen, zu senden und/oder zu empfangen.

5. Greifarm nach einem der Ansprüche 1 bis 4,
**dadurch gekennzeichnet, dass**
die Datenübertragungseinheit (1) mindestens einen Transponder und/oder Transceiver, insbesondere in Form eines RFID-Systems, aufweist.

6. Greifarm nach einem der Ansprüche 1 bis 5,
**dadurch gekennzeichnet, dass**
die Datenübertragungseinheit (1) mindestens eine Richtantenne, insbesondere eine Phased-Array-Antenne, aufweist, die in dem Greifarm integriert, eingesetzt und/oder auf dem Greifarm angeordnet ist.

7. Greifarm nach einem der Ansprüche 1 bis 6,
**dadurch gekennzeichnet, dass**
die Datenübertragungseinheit (1) eine Energiequelle, insbesondere in Form einer Batterie, und/oder eine Induktionsspule, die von einem Magnetfeld, insbesondere einem magnetischen Wechselfeld, den Versorgungsstrom für die Datenübertragungseinheit (1) erzeugt.

8. Transportvorrichtung mit einer Vielzahl von Greifvorrichtungen (1) mit mindestens einem Paar aus einem Greifarm (3) nach einem der vorhergehenden Ansprüche und einem gegengleich ausgebildeten Greifarm (3), wobei die Transportvorrichtung die Datenempfangseinheit (2) zum Empfangen der Daten von der einen oder mehreren Datenübertragungseinheiten (1) und zum Weiterleiten der Daten an eine Rechnereinheit aufweist, wobei insbesondere die Datenempfangseinheit (2) an einer Rotationsachse (7) der Transportvorrichtung angeordnet ist.

9. System aufweisend
einen Greifarm (3) nach einem der Ansprüche 1 bis 7,
wobei das System ferner folgendes aufweist:
eine Datenverarbeitungseinheit und
die Datenübertragungseinheit (1), welche die von der Datenerzeugungseinheit erzeugten Daten des Greifarms (3) an die Datenverarbeitungseinheit überträgt.

10. System nach Anspruch 9,
wobei die Datenerzeugungseinheit, die Datenübertragungseinheit (1) und die Datenverarbeitungseinheit plug-and-play fähig sind.

## Claims

1. A gripper arm for a gripping device for gripping, holding and guiding particularly bottle-like containers which is designed to move a gripping section of the gripper arm by pivoting the gripper arm from an open position into a gripping position or vice versa, having a bore for supporting a bearing pin for pivotally fixing the gripper arm in the device, and
an energy store for moving the gripping section of the gripper arm from the gripping position into the open position or vice versa, **characterized in that** the gripper arm comprises a data transmission unit (1) having a data generation unit,
wherein the data transmission unit (1) is arranged in, at or on the gripper arm and designed to
- receive data from the data generation unit, and
- send data based on the received data to a data receiver unit,
wherein the data transmission unit (1) is designed to send the data wirelessly, and
the data generation unit
(i) is designed to generate status data containing information about a status variable of a gripping device and comprises a detection unit for detecting the at least one status variable of the gripping device and a data unit for generating the status data, and/or
(ii) electronic components for measuring characteristics and properties of the gripper arm which generate measurement data automatically or by means of a control signal and provide it to the data generation unit (1).

2. The gripper arm according to claim 1,
**characterized in that**
the data transmission unit is designed to send and/or receive the data in cable and/or contact-bound manner, in particular by means of electrical and/or optical signals.

3. The gripper arm according to claim 1 or 2,
**characterized in that**
the data transmission unit is designed as a bearing bush inserted into a bore of the gripper arm and designed to act as a bearing for a bearing pin and to send and/or receive the data to/from the bearing pin via contacts, particularly sliding contacts.

4. The gripper arm according to one of claims 1 to 3,
**characterized in that**
the data transmission unit is designed to send and/or receive the data wirelessly by means of electromagnetic and/or optical signals.

5. The gripper arm according to one of claims 1 to 4,
**characterized in that**
the data transmission unit (1) comprises at least one transponder and/or transceiver, particularly in the form of an RFID system.

6. The gripper arm according to one of claims 1 to 5,
**characterized in that**
the data transmission unit (1) comprises at least one directional antenna, particularly a phased array antenna, which is integrated or inserted into the gripper arm and/or arranged on the gripper arm.

7. The gripper arm according to one of claims 1 to 6,
**characterized in that**
the data transmission unit (1) has an energy source, particularly in the form of a battery, and/or an induction coil which generates the supply current for the data transmission unit (1) from a magnetic field, in particular an alternating magnetic field.

8. A transport device having a plurality of gripping devices (1) with at least one pair comprised of one gripper arm (3) according to one of the preceding claims and one oppositely configured gripper arm (3), wherein the transport device comprises the data receiving unit (2) for receiving the data from the one or more data transmission units (1) and for forwarding the data to a computer unit, wherein particularly the data receiving unit (2) is arranged on an axis of rotation (7) of the transport device.

9. A system comprising
a gripper arm (3) according to one of claims 1 to 7,
wherein the system further comprises the following:
a data processing unit and
the data transmission unit (1) which transmits the data of the gripper arm (3) generated by the data generation unit to the data processing unit.

10. The system according to claim 9,
wherein the data generation unit, the data transmission unit (1) and the data processing unit are Plug and Play-enabled.

## Revendications

1. Bras de préhension pour un dispositif de préhension destiné à saisir, maintenir et guider des récipients en particulier de type bouteille, qui est conçu pour déplacer une portion de préhension du bras de préhension en faisant pivoter le bras de préhension d'une position d'ouverture à une position de préhension ou inversement,
présentant un alésage destiné à loger un pivot pour la fixation pivotante du bras de préhension dans le dispositif, et
comprenant un accumulateur de force destiné à déplacer la portion de préhension du bras de préhension de la position de préhension à la position d'ouverture ou inversement,
**caractérisé en ce que**
le bras de préhension comprend une unité de transmission de données (1) ayant une unité de génération de données,
l'unité de transmission de données (1) étant disposée dans, contre ou sur le bras de préhension et étant conçue pour
- recevoir des données de l'unité de génération de données, et
- envoyer des données, basées sur les données reçues, à une unité de réception de données,
l'unité de transmission de données (1) étant conçue pour envoyer les données sans fil, et
l'unité de génération de données
(i) étant conçue pour générer des données d'état qui contiennent une information sur une grandeur d'état d'un dispositif de préhension,
et comprenant une unité de détection destinée à détecter ladite au moins une grandeur d'état du dispositif de préhension et une unité de données destinée à générer les données d'état, et/ou
(ii) comprenant des composants électroniques destinés à mesurer des caractéristiques et des propriétés du bras de préhension, qui génèrent des données de mesure automatiquement ou par un signal de commande et les mettent à disposition de l'unité de transmission de données (1).

2. Bras de préhension selon la revendication 1,
**caractérisé en ce que**
l'unité de transmission de données est conçue pour envoyer et/ou recevoir les données par câble et/ou par contact, en particulier au moyen de signaux électriques et/ou optiques.

3. Bras de préhension selon la revendication 1 ou 2,
**caractérisé en ce que**
l'unité de transmission de données est réalisée sous la forme d'un coussinet inséré dans un alésage du bras de préhension et conçu pour faire office de logement pour un pivot et pour envoyer et/ou recevoir les données vers ou depuis le pivot par l'intermédiaire de contacts, en particulier de contacts glissants.

4. Bras de préhension selon l'une des revendications 1 à 3,
**caractérisé en ce que**
l'unité de transmission de données est conçue pour envoyer et/ou recevoir les données sans fil au moyen de signaux électromagnétiques et/ou optiques.

5. Bras de préhension selon l'une des revendications 1 à 4,
**caractérisé en ce que**
l'unité de transmission de données (1) comporte au moins un transpondeur et/ou un émetteur-récepteur, en particulier sous la forme d'un système RFID.

6. Bras de préhension selon l'une des revendications 1 à 5,
**caractérisé en ce que**
l'unité de transmission de données (1) comporte au moins une antenne directionnelle, en particulier une antenne réseau à commande de phase, qui est intégrée ou insérée dans le bras de préhension et/ou disposée sur le bras de préhension.

7. Bras de préhension selon l'une des revendications 1 à 6,
**caractérisé en ce que**
l'unité de transmission de données (1) comporte une source d'énergie, en particulier sous la forme d'une batterie, et/ou une bobine d'induction qui génère le courant d'alimentation de l'unité de transmission de données (1) à partir d'un champ magnétique, en particulier d'un champ magnétique alternatif.

8. Dispositif de transport comprenant une pluralité de dispositifs de préhension (1) ayant au moins une paire constituée d'un bras de préhension (3) selon l'une des revendications précédentes et d'un bras de préhension (3) de conception complémentaire, le dispositif de transport comprenant l'unité de réception de données (2) destinée à recevoir les données de l'une ou de plusieurs unités de transmission de données (1) et à transmettre les données à une unité de calcul, en particulier, l'unité de réception de données (2) étant disposée sur un axe de rotation (7) du dispositif de transport.

9. Système comprenant
un bras de préhension (3) selon l'une des revendications 1 à 7,
le système comprenant en outre ce qui suit :
une unité de traitement de données et
l'unité de transmission de données (1) qui transmet à l'unité de traitement de données les données du bras de préhension (3) générées par l'unité de génération de données.

10. Système selon la revendication 9,
dans lequel l'unité de génération de données, l'unité de transmission de données (1) et l'unité de traitement de données sont de type plug-and-play.
